# FASCICULE DE BREVET EUROPEEN

(11) **EP 1 349 417 B1**
(45) Date de publication et mention de la délivrance du brevet: **02.08.2006**
(21) Numéro de dépôt: 03290745.3
(22) Date de dépôt: 25.03.2003
(51) Int. Cl.: H04Q 11/00

(54) **Brasseur de signaux diffusant notamment pour signaux optiques**
Multicast-fähiger Crossconnect für optische Signale
Multicasting optical cross-connect

(30) Priorité: 25.03.2002 FR 0203694
(43) Date de publication de la demande: 01.10.2003
(73) Titulaire: ALCATEL, 75008 Paris (FR)
(72) Inventeur: Noirie, Ludovic, 91620 Nozay (FR); Penninckx, Denis, 91620 Nozay (FR); Jourdan, Amaury, 92310 Sevres (FR)
(74) Mandataire: Sciaux, Edmond

(56) Documents cités:
- EP-A- 1 030 532
- EP-A- 1 175 121
- HU W S ET AL: "MULTICASTING OPTICAL CROSS CONNECTS EMPLOYING SPLITTER-AND-DELIVERYSWITCH" IEEE PHOTONICS TECHNOLOGY LETTERS, IEEE INC. NEW YORK, US, vol. 10, no. 7, 1 juillet 1998 (1998-07-01), pages 970-972, XP000771730 ISSN: 1041-1135

## Description

La présente invention concerne un brasseur de signaux diffusant spatialement, plus particulièrement adapté aux réseaux de communication optique utilisant la commutation paquet.

De manière connue, un réseau de communication optique est constitué de noeuds, chaque noeud recevant des signaux provenant d'autres noeuds sur ses ports d'entrées et émettant des signaux vers d'autres noeuds à partir de ses ports de sortie. Chaque signal reçu sur un port d'entrée va donc être émis à partir d'un port de sortie vers un autre noeud destiné à recevoir ce signal. Il doit donc y avoir une correspondance entre les signaux d'entrée reçus et les signaux de sortie émis c'est à dire que le signal d'entrée reçu sur un certain port doit être judicieusement dirigé vers le bon port de sortie : c'est la fonction d'un brasseur de signaux. Chaque brasseur est un dispositif inclus dans chaque noeud qui oriente chaque signal d'entrée vers le port de sortie qui lui est associé.

Il s'avère souvent utile de diffuser un même signal d'entrée vers plusieurs ports de sortie, c'est à dire de réaliser des brasseurs capables, pour chaque signal d'entrée, de fournir plusieurs signaux de sortie équivalents à ce signal d'entrée ; de tels brasseurs sont appelés brasseurs diffusants.

Des brasseurs diffusants sont connus par les articles :
« Design and implementation of a fully reconfigurable all-optical cross-connect for high-capacity multi-wavelength transport network » ; A. Jourdan et al., IEEE Journal of lightwave technology, vol. 14 n°6, p. 1198 juin 1996 et
« A 2.56 Tb/s Throughput packet/cell-based optical switch fabric demonstrator», S. Araki et al., ECOC'98, 20-24 September, Madrid Spain.
« Multicasting Optical Cross Connects Employing Spliter-and-Delivering Switch» Wei S. Hu and Qing J. Zang, IEEE Photonics Technology Letters, vol.10, No.7, July 1998.

Ces brasseurs diffusants sont capables de fournir, en réponse à chaque signal d'entrée, un signal de sortie équivalent à ce signal d'entrée sur chacun des ports de sortie du noeud dans lequel ce signal a été inséré en entrée.

Toutefois, de tels brasseurs diffusent le signal vers tous les ports de sortie ce qui entraîne des pertes importantes d'informations sur le signal puisque ce dernier va être divisé en un nombre de signaux égal au nombre de ports de sortie.

En outre, il n'est pas nécessaire d'envoyer le signal sur tous les ports de sortie car plusieurs ports sont associés à un même noeud de destination qui reçoit alors inutilement plusieurs fois le même signal.

On connaît également par le document EP0852437 un réseau de commutation optique, la commutation étant à la fois spatiale et temporelle. Ce document permet de transférer des signaux d'entrée ayant chacun une longueur d'onde définie vers un ou plusieurs noeuds de sortie sans avoir à utiliser de mémoire tampon lorsque deux signaux d'entrée doivent être envoyés sur le même noeud de sortie. L'architecture telle que divulguée dans cette demande de brevet comprend un étage de division-muliplexage comportant des diviseurs et des multiplexeurs en longueur d'onde, un étage de commutation spatiale comportant des commutateurs matriciels spatiaux et un étage de sélection en longueur d'onde comportant des sélecteurs en longueurs d'onde. Une telle architecture permet de transmettre sélectivement un signal d'entrée vers plusieurs noeuds de sortie sans envoyer ce signal d'entrée vers tous les noeuds de sortie.

Cependant, cette architecture utilise le multiplexage pour effectuer la commutation et suppose l'introduction en entrée de chacun des multiplexeurs de signaux de longueurs d'onde différentes. L'introduction en entrée de signaux multiplexés en longueurs d'onde impliquerait une étape préalable de démultiplexage de ces signaux.

De plus, le fait de récupérer en sortie des signaux ayant une longueur d'onde définie impose l'utilisation de sélecteurs en longueur d'onde utilisant des portes optiques.

La présente invention vise à fournir un brasseur spatial à N ports d'entrée et P ports de sorties comportant un étage de diffusion et un étage de commutation permettant de limiter la diffusion d'un signal d'entrée à certains ports de sortie utiles, d'éviter une perte d'information sur ce signal d'entrée et de permettre la diffusion spatiale de signaux d'entrée indépendamment de toute considération spectrale c'est à dire sans utiliser de multiplexage et de sélection en longueurs d'onde.

La présente invention propose à cet effet un brasseur spatial à N ports d'entrée et P ports de sorties tel que décrit dans la revendication 1.

Grâce à l'invention, on peut limiter la séparation du signal à la connectivité C, c'est à dire aux nombres C de signaux utiles. On évite ainsi les pertes dues à une division complète du signal, c'est à dire une division en P signaux.

En outre, l'invention peut être utilisée avec tout type de signaux d'entrée, chacun des signaux d'entrée étant orienté spatialement vers des ports de sortie, indépendamment de tout traitement en longueur d'onde. On peut donc également envoyer un signal multiplexé sur différents ports de sortie sans avoir à traiter ce signal en longueur d'onde, par exemple en le démultiplexant.

De plus, le brasseur n'utilise aucune étape de multiplexage entre l'étage de diffusion et l'étage de commutation.

Selon un mode de réalisation, le brasseur comporte exactement N diffuseurs et C modules de commutation spatiale.

De manière avantageuse, chacun desdits C modules comporte des moyens pour relier respectivement chacune de ses dites N entrées à une de ses dites P/C sorties.

Selon un premier mode de réalisation, chacun des C modules de commutation est un commutateur matriciel non bloquant à N entrées et P/C sorties.

Selon un second mode de réalisation, chacun des C modules de commutation comporte :
- K commutateurs matriciels non bloquants à N/K entrées et P/C sorties où K est un diviseur entier de N ;
- et P/C commutateurs matriciels non bloquants à K entrées et une sortie, chacune desdites K entrées étant respectivement reliée à une sortie de chacun desdits K commutateurs.

On réduit ainsi considérablement la taille des matrices par rapport au mode de réalisation précédent ce qui permet une économie de coût importante.

Selon une variante, au moins un des C modules de commutation comporte :
- K commutateurs matriciels non bloquants à N/K entrées et P/C sorties où K est un diviseur entier de N et;
- P/C commutateurs matriciels non bloquants à K entrées et une sortie, chacune desdites K entrées étant respectivement reliée à une sortie de chacun desdits K commutateurs.

Le brasseur peut alors être sous-équipé c'est à dire que certains modules de commutation comportent moins de K commutateurs ou moins de P/C commutateurs. Ceci permet de limiter le coût de fabrication et d'installation, les commutateurs manquants étant ensuite ajoutés en fonction du besoin.

Selon une variante, le nombre N de ports d'entrée peut être égal au nombre P de ports de sortie.

Selon une autre variante, K est égal à C.

Avantageusement, l'étage de commutation utilise une technologie à base de LiNbO₃. Cette technologie permet l'obtention de commutateur non diffusant c'est à dire qu'une entrée est reliée au plus à une sortie. Or, selon l'invention, il n'est pas utile d'utiliser des commutateurs diffusants, la diffusion se faisant au niveau des diviseurs. Ainsi une technologie LiNbO₃ se prête très bien à l'invention.

De manière avantageuse, les P/C commutateurs matriciels à K entrées et une sortie sont des commutateurs à semi-conducteur SOA (Semiconductor Optical Amplifier).

Avantageusement, chacune des P/C sorties desdits C modules est suivie d'un amplificateur. Un amplificateur permettra en effet de restituer la qualité de signal d'entrée si celui ci a subi des pertes lors de la division et de la commutation malgré sa séparation limitée en entrée. Pour des raisons identiques, chacune des N entrées des N diviseurs peut être précédée d'un amplificateur.

Selon un mode de réalisation préféré, chacun desdits modules de commutation spatiale comporte :
- un premier étage comportant des matrices de commutation spatiale du type à maintien de polarisation ;
- et un deuxième étage comportant des d'amplificateurs optiques à semi-conducteur du type à maintien de polarisation.

La présente invention propose également un système de transmission de signaux comportant un brasseur selon l'invention caractérisé en ce que ledit système comporte :
- au moins un multiplexeur pour multiplexer M signaux ayant M longueurs d'onde différentes (λi)_{1≤i≤M}, M étant un entier inférieur ou égal à N,
- au moins un amplificateur EDFA (Erbium Doped Fibre Amplifier) pour amplifier le signal multiplexé,
- au moins un démultiplexeur pour démultiplexer le signal multiplexé en M signaux démultiplexés de sorte que lesdits M signaux sont entrés sur M ports d'entrée dudit brasseur.

Ainsi, le brasseur selon l'invention peut parfaitement utiliser des amplificateurs EDFA en partageant l'utilisation de ces amplificateurs sur plusieurs des ports d'entrée regroupant judicieusement les signaux d'entrée ayant des longueurs d'onde différentes.

D'autres caractéristiques et avantages de la présente invention apparaîtront dans la description suivante d'un mode de réalisation de l'invention, donné à titre illustratif et nullement limitatif.

Dans les figures suivantes :
- La figure 1 représente l'architecture d'un brasseur spatial selon un premier mode de réalisation de l'invention,
- La figure 2 représente l'architecture d'un brasseur spatial selon un second mode de réalisation de l'invention,
- La figure 3 représente un brasseur spatial selon l'architecture de la figure 2 avec un même nombre de ports d'entrée et de sortie,
- La figure 4 représente un mode de réalisation d'une partie du brasseur spatial selon l'architecture de la figure 1
Dans toutes les figures, les éléments communs portent les mêmes numéros de référence.

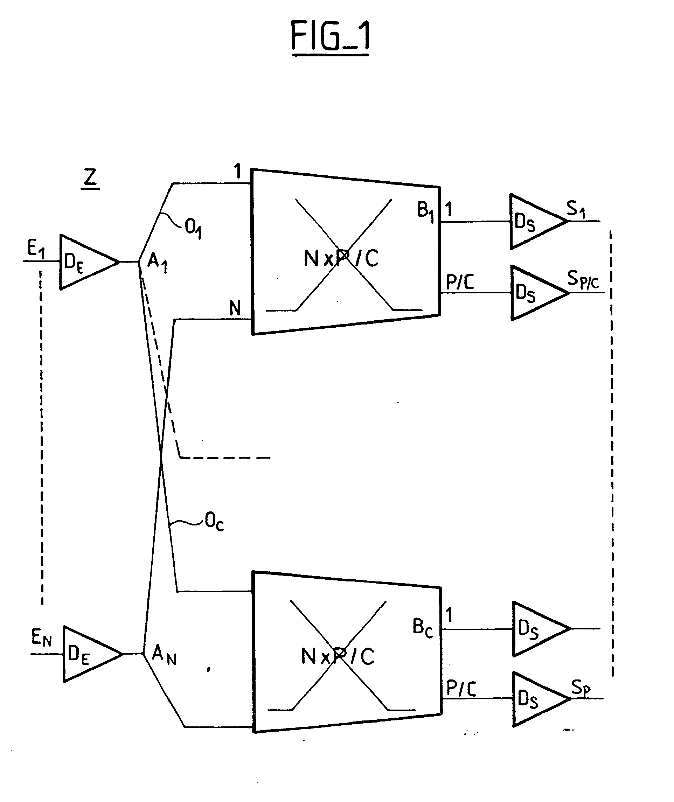

La **figure 1** représente l'architecture d'un brasseur spatial Z. Ce brasseur Z inclut N ports d'entrée (Eᵢ)_{1≤i≤N}, N coupleurs (Aᵢ)_{1≤i≤N}, N amplificateurs d'entrée D_{E}, C commutateurs matriciels (Bᵢ)_{1≤i≤C}, P amplificateurs de sortie D_{S} et P ports de sortie (Sᵢ)_{1≤i≤P}.

Les N ports d'entrée (Eᵢ)_{1≤i≤N} permettent de recevoir N signaux d'entrée portant des informations à transmettre en sortie.

Les N coupleurs (Aᵢ)_{1≤i≤N} ont chacun une entrée et sont adaptés à répondre à chaque signal d'entrée reçu en diffusant C signaux portant la même information que le signal d'entrée.

Les C commutateurs matriciels (Bᵢ)_{1≤i≤C} sont des commutateurs spatiaux non bloquants à N entrées et P/C sorties, C étant donc un diviseur de P. Chacun des C commutateurs permet donc de relier électriquement respectivement chacune des N entrées à une de ses P/C sorties.

Un signal d'entrée est d'abord amplifié par l'un des amplificateurs D_{E}. Le signal d'entrée amplifié est injecté en entrée d'un des N coupleurs (Aᵢ)_{1≤i≤N} et est alors diffusé en C signaux, respectivement sur C sorties O₁,..., O_{c} du coupleur. Chacun de ces C signaux est injecté sur une entrée de chacun des C commutateurs matriciels (Bᵢ)_{1≤i≤C} qui va commuter un des C signaux sur l'une de ses P/C sorties.

Chacun de ces C signaux commutés est alors amplifié par un des amplificateurs D_{S} qui le transmet sur l'un des ports de sortie (Sᵢ)_{1≤i≤p}.

On retrouve donc, sur C ports de sortie, C signaux diffusés à partir d'un même signal d'entrée. Le brasseur Z permet ainsi de diffuser un signal sur C ports de sortie, C étant inférieur strictement à P, afin de restreindre la diffusion du signal d'entrée aux C ports de sortie utiles et non à tous les P ports de sortie.

Les commutateurs matriciels peuvent utiliser une technologie à base de LiNbO₃.

Les amplificateurs D_{E} et D_{S} sont par exemple des amplificateurs SOA (Semiconductor Optical Amplifier).

On peut également utiliser des amplificateurs EDFA (Erbium Doped Fibre Amplifier) non représentés, et regrouper l'amplification de M signaux ayant M longueurs d'onde différentes (λi)_{1≤i≤M}, M étant un entier inférieur ou égal à N, avant d'injecter ces M signaux dans le brasseur. Ainsi, les M signaux sont tout d'abord regroupés par un multiplexeur non représenté. Le signal multiplexé est ensuite amplifié au moyen d'un amplificateur EDFA et le signal multiplexé et amplifié est démultiplexé en M signaux par un démultiplexeur non représenté, chacun des M signaux étant alors entrés sur M ports d'entrée du brasseur.

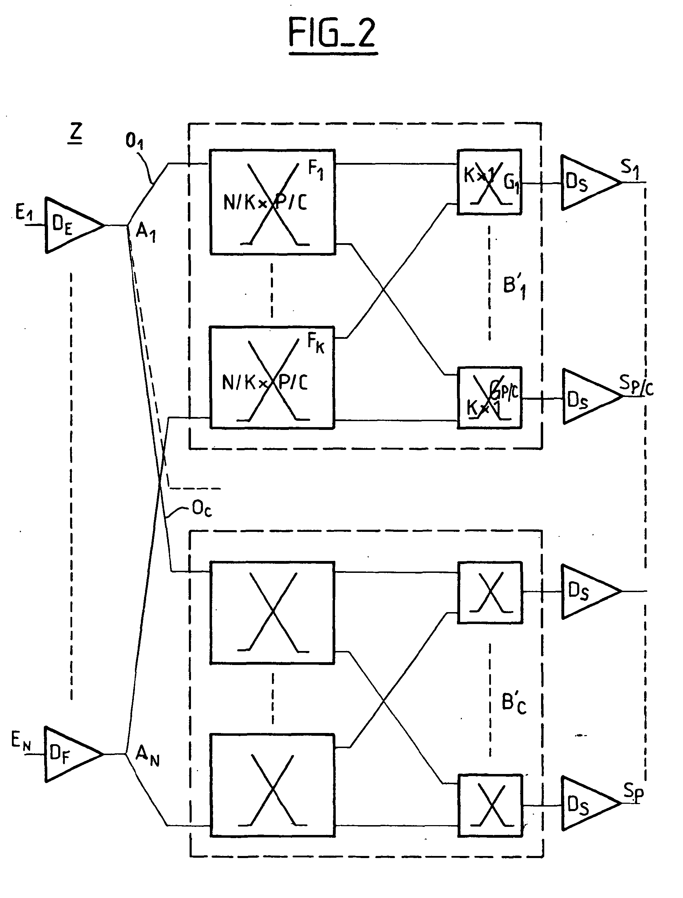

La **figure 2** représente l'architecture d'un brasseur spatial Z tel que représenté en figure 1 à la différence que les C commutateurs matriciels (Bᵢ)_{1≤i≤C} sont remplacés par C modules de commutation (B'ᵢ)_{1≤i≤C}. Chacun des C modules de commutation (B'ᵢ)_{1≤i≤C} comprend K commutateurs matriciels non bloquants (Fᵢ)_{1≤i≤K} à N/K entrées et P/C sorties où K est un diviseur entier de N et P/C commutateurs matriciels non bloquants (Gᵢ)_{1≤i≤P/C} à K entrées et 1 sortie.

Chacune des K entrées des P/C commutateurs matriciels non bloquants (Gᵢ)_{1≤i≤P/C} est respectivement reliée à une sortie de chacun des K commutateurs matriciels non bloquants (Fᵢ)_{1≤i≤K}.

Le fonctionnement du brasseur est identique à celui décrit en relation avec la figure 1.

Les commutateurs matriciels non bloquants (Gᵢ)_{1≤i≤P/C} sont par exemple des commutateurs à semi-conducteur SOA et les K commutateurs matriciels non bloquants (Fᵢ)_{1≤i≤K} sont des commutateurs utilisant une technologie à base de LiNbO₃.

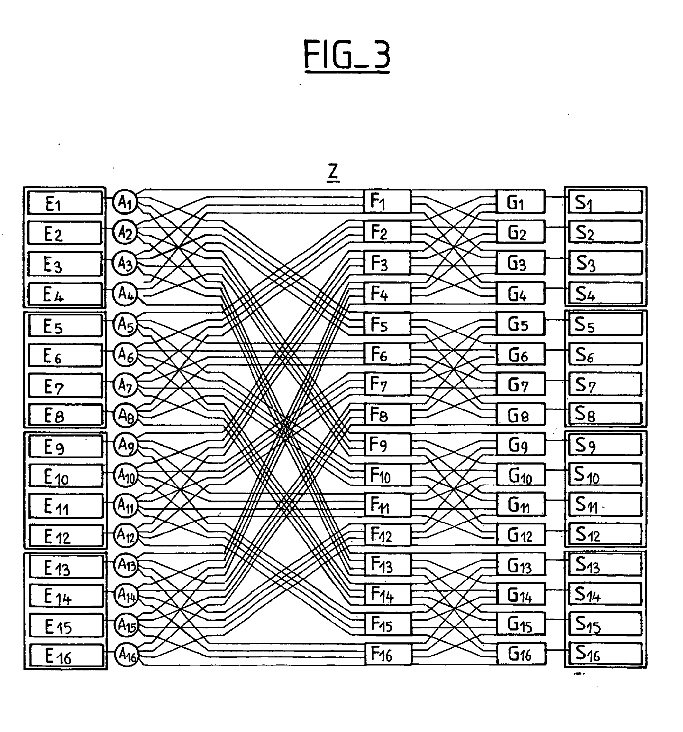

La **figure 3** représente un brasseur spatial Z selon l'architecture de la figure 2 avec un même nombre de ports d'entrée et de sortie égal 16 et avec des entiers K et C égaux à 4. Le brasseur Z comprend 16 ports d'entrée (Eᵢ)_{1≤i≤16}, 16 coupleurs (Aᵢ)_{1≤i≤16}, 16 commutateurs matriciels non bloquants (Fᵢ)_{1≤i≤16} à 4 entrées et 4 sorties, 16 commutateurs matriciels non bloquants (Gᵢ)_{1≤i≤4} à 4 entrées et 1 sortie, et 16 ports de sorties (Sᵢ)_{1≤i≤16}. Pour la clarté du dessin, les amplificateurs n'ont pas été représentés.

Un brasseur peut également ne pas être complet, c'est à dire être sous équipé. Ainsi, pour des raisons de coût de fabrication et d'installation, on peut envisager d'installer moins de diviseurs que leur nombre maximum N ou moins de modules de commutation que leur nombre maximum C. De manière analogue, un module de commutation peut également être sous équipé ; ainsi, un module de commutation peut comporter moins de K commutateurs matriciels non bloquants à N/K entrées et P/C sorties ou moins de P/C commutateurs matriciels non bloquants à K entrées et 1 sortie. Les composants manquants sont ensuite ajoutés en fonction des besoins de l'utilisateur.

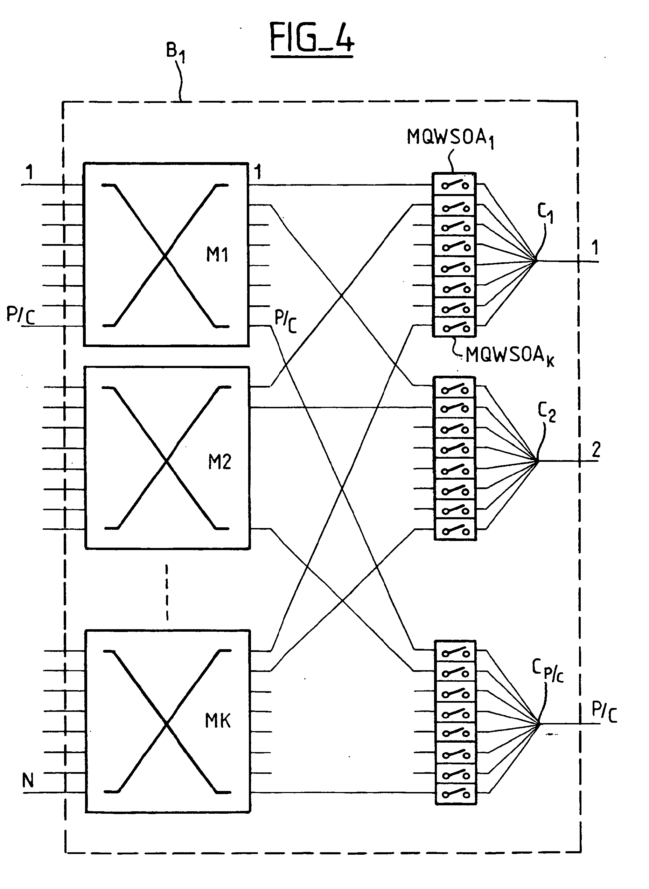

La **figure 4** représente un mode de réalisation particulier des modules de commutation spatiale B₁, ..., B_{C} du brasseur spatial selon l'architecture de la figure 1. Par exemple, le module B₁ comporte :
- un premier étage constitué de K matrices de commutation spatiale M₁,..., M_{K} (où K est un diviseur entier de N) ayant P/C entrées et P/C sorties, ces entrées constituant les N entrées du module B₁ ;
- un deuxième étage constitué de P/C groupes d'amplificateurs, tel que le groupe MQWSOA₁,..., MQWSOAₖ ; ces amplificateurs étant utilisés comme portes optiques, commandées par des moyens non représentés ; et chaque groupe ayant P/C entrées couplées respectivement à une sortie de chacune des K matrices M₁, ..., M_{K} ;
- et un troisième étage constitué de P/C multiplexeurs spectraux C₁,..., C_{P/C}, ayant chacun K entrées reliées respectivement aux K sorties d'un même groupe d'amplificateurs, tel que le groupe MQWSOA₁,..., MQWSOA_{K}, les sorties de ces multiplexeurs constituant les sorties du module B_{1.}

Selon un mode de réalisation avantageux, les matrices M₁,..., M_{K} sont des matrices utilisant les propriété électro-optiques du niobate de lithium (LibNbO₃), telles que les matrices commercialisées sous la référence Packet.8x8 par la société Lynx (Israël) ; et les amplificateurs MQWSOA₁,..., MQWSOA_{K} sont des amplificateurs optiques à semi-conducteur et à multi-puits quantiques, couramment disponibles dans le commerce.

Les matrices au niobate de lithium ont de très bonnes performances mais sont, elles aussi, très sensibles à la polarisation. Elles sont dites « à maintien de polarisation » parce qu'elles atténuent le signal optique si le plan de polarisation de ce signal ne coïncide pas avec un plan privilégié. Il est donc nécessaire d'utiliser des composants optiques et des raccords optiques à maintien de polarisation, depuis les entrées E₁, ..., E_{N} jusqu'à ces matrices M₁, ..., M_{K}, pour éviter cette atténuation.

Les amplificateurs MQWSOA₁,..., MQWSOA_{k.} à semi-conducteur à multi-puits quantiques, ont des performances plus élevées que celles des amplificateurs optiques à semi-conducteur sans multi-puits quantiques, mais ils sont très sensibles à la polarisation du signal optique. Leur utilisation entraîne généralement un surcoût parce qu'il est nécessaire d'utiliser des composants optiques et des raccords optiques à maintien de polarisation, en amont de ces amplificateurs. Mais dans ce mode de réalisation du brasseur selon l'invention, on peut les utiliser sans surcoût notable puisque les matrices au niobate de lithium M₁, ..., M_{K} nécessitent, de toutes façons, d'utiliser des composants optiques et des raccords optiques à maintien de polarisation, depuis les entrées E₁, ..., E_{N} jusqu'à ces matrices M₁, ..., M_{K.}

Bien entendu, l'invention n'est pas limitée au mode de réalisation qui vient d'être décrit. Notamment, on pourra utiliser d'autres technologies concernant les commutateurs matriciels et les amplificateurs.

En outre, le brasseur selon l'invention est aussi bien adapté pour la commutation par paquets que pour la commutation circuit.

Enfin, on pourra remplacer tout moyen par un moyen équivalent sans sortir du cadre de l'invention.

## Revendications

1. Brasseur optique spatial (Z) à N ports (Eᵢ) d'entrée et P ports (Sᵢ) de sorties comprenant
• un étage de diffusion comportant au plus N diviseurs (Aᵢ) de signaux ayant chacun une entrée et C sorties où C est un diviseur entier de P strictement inférieur à P, chaque entrée étant reliée à un desdits N ports (Eᵢ) d'entrée de sorte que chacun desdits N diviseurs (Aᵢ) sépare un signal reçu sur un desdits N ports d'entrée (Eᵢ) en C signaux sur lesdites C sorties,
• un étage de commutation spatiale comportant au plus C modules (Bᵢ, B'ᵢ) de commutation spatiale,
- ces C modules (Bᵢ, B'ᵢ) de commutation spatiale étant non bloquants,
- et chacun desdits C modules (Bᵢ, B'ᵢ) ayant N entrées et P/C sorties, lesdites N entrées étant reliées à N sorties dudit étage de diffusion, chacune desdites N sorties provenant d'un diviseur (Aᵢ) différent, chacune desdites P/C sorties desdits C modules (Bᵢ, B'ᵢ) étant respectivement reliée à un desdits P ports (Sᵢ) de sortie.
**caractérisé en ce que:**
les C modules (Bᵢ, B'ᵢ) de commutation spatiale sont non diffusants.

2. Brasseur (Z) selon la revendication 1 comportant exactement N diviseurs (Aᵢ) et C modules (Bᵢ, B'ᵢ).

3. Brasseur (Z) selon la revendication 1 **caractérisé en ce que** chacun desdits C modules (Bᵢ, B'ᵢ) comporte des moyens pour relier respectivement chacune de ses dites N entrées à une de ses dites P/C sorties.

4. Brasseur (Z) selon la revendication 1, **caractérisé en ce que** chacun desdits C modules (Bᵢ, B'ᵢ) de commutation est un commutateur matriciel (Bᵢ) non bloquant à N entrées et P/C sorties.

5. Brasseur (Z) selon la revendication 1, **caractérisé en ce** chacun desdits C modules (B'ᵢ) de commutation comporte :
• K commutateurs matriciels (Fᵢ) non bloquants à N/K entrées et P/C sorties où K est un diviseur entier de N et;
• P/C commutateurs matriciels (Gᵢ) non bloquants à K entrées et une sortie, chacune desdites K entrées étant respectivement reliée à une sortie de chacun desdits K commutateurs (Fᵢ).

6. Brasseur (Z) selon la revendication 1, **caractérisé en ce qu'**au moins un desdits C modules (B'ᵢ) de commutation comporte :
• K commutateurs matriciels (Fᵢ) non bloquants à N/K entrées et P/C sorties où K est un diviseur entier de N et;
• P/C commutateurs matriciels (Gᵢ) non bloquants à K entrées et une sortie, chacune desdites K entrées étant respectivement reliée à une sortie de chacun desdits K commutateurs (Fᵢ).

7. Brasseur (Z) selon la revendication 1, **caractérisé en ce que** lesdits P/C commutateurs matriciels (Gᵢ) sont des commutateurs à semi-conducteur SOA (Semiconductor Optical Amplifier)

8. Brasseur (Z) selon la revendication 1, **caractérisé en ce que** ledit nombre de ports d'entrée N est égale au dit nombre de ports de sortie P.

9. Brasseur (Z) selon la revendication 5, **caractérisé en ce que** K est égal à C.

10. Brasseur (Z) selon la revendication 1, **caractérisé en ce que** ledit étage de commutation utilise une technologie à base de LiNbO₃.

11. Brasseur (Z) selon la revendication 1, **caractérisé en ce que** chacune desdites P/C sorties desdits C modules (Bᵢ, B'ᵢ) est suivi d'un amplificateur (Ds).

12. Brasseur selon la revendication 1, **caractérisé en ce que** chacune desdites N entrées desdits N diviseurs est précédée d'un amplificateur (D_{E}).

13. Brasseur selon la revendication 1, **caractérisé en ce que** chacun desdits modules (Bᵢ, B'ᵢ) de commutation spatiale comporte :
- un premier étage comportant des matrices de commutation spatiale (M₁,..., Mₖ) du type à maintien de polarisation ;
- et un deuxième étage comportant des d'amplificateurs optiques à semi-conducteur (MQWSOA₁,..., MQWSOAₖ)du type à maintien de polarisation.

14. Système de transmission de signaux comportant un brasseur (Z) selon l'une des revendications 1 à 13, **caractérisé en ce que** ledit système comporte :
• au moins un multiplexeur pour multiplexer M signaux ayant M longueurs d'onde différentes (λi)_{1≤i≤M}, M étant un entier inférieur ou égal à N,
• au moins un amplificateur EDFA (Erbium Doped Fibre Amplifier) pour amplifier le signal multiplexé,
• au moins un démultiplexeur pour démultiplexer le signal multiplexé en M signaux démultiplexés de sorte que lesdits M signaux sont entrés sur M ports d'entrée dudit brasseur.

## Claims

1. An optical space cross-connect unit (Z) with N input ports (Eᵢ) and P output ports (Sᵢ), comprising:
· a broadcast stage comprising at most N signal dividers (Aᵢ) each having one input and C outputs where C is an integer factor of P less than P, each input being connected to one of said N input ports (Eᵢ) so that each of said N dividers (Aᵢ) divides a signal received at one of said N input ports (Eᵢ) into C signals at said C outputs, and
· a space switching stage comprising at most C space switching modules (Bᵢ, B'ᵢ),
· the C space switching modules (Bᵢ, B'ᵢ) being non-blocking, and
· each of said C modules (Bᵢ, B'ᵢ) having N inputs and P/C outputs, said N inputs are connected to N outputs of said broadcast stage, each of said N outputs comes from a different divider (Aᵢ), and each of said P/C outputs of said C modules (Bᵢ, B'ᵢ) is connected to a respective one of said P output ports (Sᵢ),
which cross-connect unit is **characterized in that**:
· the C space switching modules (Bᵢ, B'ᵢ) are non-broadcasting.

2. A cross-connect unit (Z) according to claim 1, comprising exactly N dividers (Aᵢ) and C modules (Bᵢ, B'ᵢ).

3. A cross-connect unit (Z) according to claim 1, **characterized in that** each of said C modules (Bᵢ, B'ᵢ) comprises means for connecting each of its N inputs to one of its P/C outputs.

4. A cross-connect unit (Z) according to claim 1, **characterized in that** each of said C switching modules (Bᵢ, B'ᵢ) is a non-blocking switching matrix (Bᵢ) with N inputs and P/C outputs.

5. A cross-connect unit (Z) according to claim 1, **characterized in that** each of said C switching modules (B'ᵢ) comprises:
· K non-blocking switching matrices (Fᵢ) with N/K inputs and P/C outputs, where K is an integer factor of N; and
· P/C non-blocking switching matrices (Gᵢ) with K inputs and one output, each of said K inputs being connected to a respective output of each of said K switches (Fi).

6. A cross-connect unit (Z) according to claim 1, **characterized in that** at least one of said C switching modules (B'ᵢ) comprises:
· K non-blocking switching matrices (Fᵢ) with N/K inputs and P/C outputs, where K is an integer factor of N; and
· P/C non-blocking switching matrices (Gᵢ) with K inputs and one output, each of said K inputs being connected to a respective output of each of said K switches (Fᵢ).

7. A cross-connect unit (Z) according to claim 1, **characterized in that** said P/C switching matrices (Gᵢ) are semiconductor optical amplifier (SOA) switches.

8. A cross-connect unit (Z) according to claim 1, **characterized in that** said number N of input ports is equal to said number P of output ports.

9. A cross-connect unit (Z) according to claim 5, **characterized in that** K is equal to C.

10. A cross-connect unit (Z) according to claim 1, **characterized in that** said switching stage uses a technology based on LiNbO₃.

11. A cross-connect unit (Z) according to claim 1, **characterized in that** each of said P/C outputs of said C modules (Bᵢ, B'ᵢ) is followed by an amplifier (D_{S}).

12. A cross-connect unit according to claim 1, **characterized in that** each of said N inputs of said N dividers is preceded by an amplifier (D_{E}).

13. A cross-connect unit according to claim 1, **characterized in that** each of said space switching modules (Bᵢ, B'ᵢ) comprises:
· a first stage comprising polarization-maintaining space switching matrices (M₁, ..., M_{K}); and
· a second stage comprising polarization-maintaining semiconductor optical amplifiers (MQWSOPA₁, ..., MQWSOAₖ).

14. A signal transmission system comprising a cross-connect unit (Z) according to any one of claims 1 to 13 and **characterized in that** said system comprises:
· at least one multiplexer for multiplexing M signals having M different wavelengths (λᵢ)_{1≤i≤M}, where M is an integer less than or equal to N;
· at least one erbium-doped fiber amplifier (EDFA) for amplifying the multiplexed signal; and
at least one demultiplexer for demultiplexing the multiplexed signal to yield M demultiplexed signal that are input to M input ports of said cross-connect unit.

## Patentansprüche

1. Räumlicher optischer Crossconnect (Z) mit N Eingangsports (Eᵢ) und P Ausgangsports (Sᵢ), umfassend
• eine Multicast-Stufe, umfassend höchstens N Signalteiler (Aᵢ), von denen jeder einen Eingang und C Ausgänge umfasst, wobei C ein ganzzahliger Teiler von P in jedem Fall kleiner P ist, wobei jeder Eingang mit einem der N Eingangsports (Eᵢ) so verbunden ist, dass jeder der N Teiler (Aᵢ) ein an einem der N Eingangsports (Eᵢ) empfangenes Signal in C Signale an den C Ausgängen teilt;
• eine räumliche Vermittlungsstufe, umfassend höchstens C räumliche Vermittlungsmodule (Bᵢ, B'ᵢ);
- hierbei sind diese C räumlichen Vermittlungsmodule (Bᵢ, B'ᵢ) blockierungsfrei;
- und hierbei weist jedes der C Module (Bᵢ, B'ᵢ) N Eingänge und P/C Ausgänge auf, wobei die N Eingänge mit N Ausgängen der Multicast-Stufe verbunden sind, wobei jeder der N Ausgänge von einem anderen Teiler (Aᵢ) kommt, wobei jeder der P/C Ausgänge der C Module (Bᵢ, B'ᵢ) jeweils mit einem der P Ausgangsports (Sᵢ) verbunden ist;
**dadurch gekennzeichnet, dass**:
die C räumlichen Vermittlungsmodule (Bᵢ, B'ᵢ) nicht Multicast-fähig sind.

2. Crossconnect (Z) nach Anspruch 1, umfassend genau N Teiler (Aᵢ) und C Module (Bᵢ, B'ᵢ).

3. Crossconnect (Z) nach Anspruch 1, **dadurch gekennzeichnet, dass** jedes der C Module (Bᵢ, B'ᵢ) Vorrichtungen umfasst, um jeweils jeden seiner N Eingänge mit einem seiner P/C Ausgänge zu verbinden.

4. Crossconnect (Z) nach Anspruch 1, **dadurch gekennzeichnet, dass** jedes der C Vermittlungsmodule (Bᵢ, B'ᵢ) ein blockierungsfreies Koppelfeld (Bᵢ) mit N Eingängen und P/C Ausgängen ist.

5. Crossconnect (Z) nach Anspruch 1, **dadurch gekennzeichnet, dass** jedes der C Vermittlungsmodule (B'ᵢ) umfasst:
• K blockierungsfreie Koppelfelder (Fᵢ) mit N/K Eingängen und P/C Ausgängen, wobei K ein ganzzahliger Teiler von N ist und;
• P/C blockierungsfreie Koppelfelder (Gᵢ) mit K Eingängen und einem Ausgang, wobei jeder der K Eingänge jeweils mit einem Ausgang jedes der K Koppelfelder (Fᵢ) verbunden ist.

6. Crossconnect (Z) nach Anspruch 1, **dadurch gekennzeichnet, dass** mindestens eines der C Vermittlungsmodule (B'ᵢ) umfasst:
• K blockierungsfreie Koppelfelder (Fᵢ) mit N/K Eingängen und P/C Ausgängen, wobei K ein ganzzahliger Teiler von N ist und;
• P/C blockierungsfreie Koppelfelder (Gᵢ) mit K Eingängen und einem Ausgang, wobei jeder der K Eingänge jeweils mit einem Ausgang jedes der K Koppelfelder (Fᵢ) verbunden ist.

7. Crossconnect (Z) nach Anspruch 1, **dadurch gekennzeichnet, dass** die P/C Koppelfelder (Gᵢ) Koppelfelder mit optischen Halbleiterverstärkern (SOA; "Semiconductor Optical Amplifier") sind.

8. Crossconnect (Z) nach Anspruch 1, **dadurch gekennzeichnet, dass** die Anzahl von Eingangsports N gleich der Anzahl von Ausgangsports P ist.

9. Crossconnect (Z) nach Anspruch 5, **dadurch gekennzeichnet, dass** K gleich C ist.

10. Crossconnect (Z) nach Anspruch 1, **dadurch gekennzeichnet, dass** die Vermittlungsstufe eine Technologie auf LiNbO₃-Basis nutzt.

11. Crossconnect (Z) nach Anspruch 1, **dadurch gekennzeichnet, dass** auf jeden der P/C Eingänge der C Module (Bᵢ, B'ᵢ) ein Verstärker (D_{S}) folgt.

12. Crossconnect nach Anspruch 1, **dadurch gekennzeichnet, dass** jedem der N Eingänge der N Teiler ein Verstärker (D_{E}) vorausgeht.

13. Crossconnect nach Anspruch 1, **dadurch gekennzeichnet, dass** jedes der räumlichen Vermittlungsmodule (Bᵢ, B'ᵢ) umfasst:
- eine erste Stufe, umfassend räumliche Vermittlungsmatrizen (M₁, ..., M_{K}) des polarisationserhaltenden Typs;
- und eine zweite Stufe, umfassend optische Halbleiterverstärker (MQWSOA₁, ..., MQWSOAₖ) des polarisationserhaltenden Typs.

14. Signalübertragungssystem, umfassend einen Crossconnect (Z) nach einem der Ansprüche 1 bis 13, **dadurch gekennzeichnet, dass** das System umfasst:
• mindestens einen Multiplexer, um M Signale mit M unterschiedlichen Wellenlängen (λi)_{1≤i≤M} zu multiplexen, wobei M eine ganze Zahl kleiner oder gleich N ist;
• mindestens einen erbiumdotierten Faserverstärker (EDFA-Verstärker; "Erbium Doped Fibre Amplifier"), um das gemultiplexte Signal zu verstärken;
• mindestens einen Demultiplexer, um das gemultiplexte Signal so in M gedemultiplexte Signale zu demultiplexen, dass die M Signale an M Eingangsports des Crossconnects eingetreten sind.
